# EUROPEAN PATENT APPLICATION

(11) **EP 4 614 105 A1**
(43) Date of publication of application: **10.09.2025**
(21) Application number: 23884701.6
(22) Date of filing: 26.10.2023
(51) Int. Cl.: F41G 1/14

(54) **COMBINED SIGHT OF VARIABLE-RETICLE RED DOT SIGHT AND MAGNIFIER**

(30) Priority: 05.11.2022 CN 202222942520 U
(71) Applicant: Huanic Corporation, Xi'an, Shaanxi 710077 (CN)
(72) Inventor: SUN, Wenhui, Shaanxi 710077 (CN); LU, Sihang, Shaanxi 710077 (CN); WANG, Dong, Shaanxi 710077 (CN)
(74) Representative: Inspicos P/S
(86) International application number: PCT/CN2023/126661
(87) International publication number: WO 2024/093769

(57) **Abstract**

The present utility model relates to a combined sight of a variable-reticle red dot sight and a magnifier, comprising a support. A positioning groove is provided on the top of the front part of the support, and a red dot sight is provided in the positioning groove; a magnifier flip-up mechanism is provided above the rear part of the support, and the magnifier flip-up mechanism is movably connected to a magnifier. According to the combined sight of a variable-reticle red dot sight and a magnifier, when the magnifier is flipped up, a magnet in the magnifier flip-up mechanism does not make contact with a magnetic switch, and at the moment, a reticle pattern in the red dot sight is in a dot-circle quick aiming mode; and when the magnifier is flipped back, the magnet is in contact with the magnetic switch, and the reticle pattern in the red dot sight is changed to be in a sniping mode. The combined sight has the advantages of a reflex sight and a telescopic sight: in a state that only the red dot sight is used, the exit pupil distance is avoided, the parallax is small, the field of view is large, the reticle is simple and clear, and aiming is quick; and in a state that the combined sight is used, the reticle has complete data, and long-range aiming is more accurate.

## Description

### TECHNICAL FIELD

The present disclosure belongs to the technical field of variable-magnification sights and, more particularly, to a combined sight of a variable-reticle red dot sight and a magnifier.

### BACKGROUND

At present, sights are generally divided into fixed-magnification sights and variable-magnification sights. For fixed-magnification sights, a structure of an optical path is very simple, consisting of: an objective lens barrel group, a relay lens group, a reticle plate, and an eyepiece barrel group. Except for a ballistic adjustment mechanism and a diopter adjustment part, there is no other movable mechanism in the entire sight body. Having fewer movable parts means an increase in component reliability. When leaving the factory, unmovable parts of some fixed-magnification gun sights are permanently glued in place. In this way, during shooting, no matter how great the vibration is, only limited parts mentioned above may be subject to the vibration.

For variable-magnification sights, a structure of an optical path is complicated, consisting of: an objective lens barrel group, a relay lens group, a variable-magnification lens group, a magnification ring, a reticle plate, and an eyepiece barrel group. In addition to a ballistic adjustment mechanism and a diopter adjustment part, the variable-magnification lens group and the magnification ring are also typically movable mechanisms of the entire sight body. However, having more movable parts in the variable-magnification sights means a decrease in component reliability. Further, a traditional method of adjusting the sight to adapt to factors such as wind is generally achieved by movement of the gun, which results in poor adjustment accuracy.

The existing variable-magnification sights mainly include quick-aiming sights (such as Vortex Razor GEN2) and rapid variable-magnification sights (such as ELCAN SPECTERDR). These sights generally adjust magnification through a handwheel or a toggle.

### SUMMARY

A red dot sight may provide a simple and clear reticle when not used in tandem with a high-power magnifier and offer a comprehensive reticle with detailed firing data when used in tandem with a high-power magnifier.

A combined sight of a variable-reticle red dot sight and a magnifier according to the present disclosure includes a support; a positioning groove is disposed above a front portion of the support, and a red dot sight is disposed in the positioning groove; a magnifier flipping mechanism is disposed above a rear portion of the support, and a magnifier is movably connected to the magnifier flipping mechanism.

Further, a positioning tenon is disposed at a middle portion of the positioning groove, and a contact point is disposed behind the positioning tenon.

Further, a magnetic Hall switch is disposed above the rear portion of the support and to right of the magnifier flipping mechanism; and a magnet corresponding to the magnetic Hall switch is disposed below the magnifier.

Further, the magnifier flipping mechanism includes a connecting plate, a rotating sleeve integrally formed with the connecting plate, and an elastic sheet disposed below the connecting plate; one end of the elastic sheet is fixed in a mounting groove on top of the support through an elastic sheet pressure plate, and another end of the elastic sheet is a free end; the rotating sleeve is movably connected to the support through a rotating shaft.

Further, an outer wall of the rotating sleeve is provided with a plurality of ribs and recesses along a length direction, the ribs and recesses are alternately arranged along a circumferential direction of the rotating sleeve, and the ribs and recesses abut against the free end of the elastic sheet.

Further, a spacer block is disposed above the connecting plate.

Further, a locking block is further disposed on a right side of the support, and the locking block is secured by a locking nut and a locking screw.

The present disclosure has following advantageous effects. The combined sight of the variable-reticle red dot sight and the magnifier provided by the present disclosure connects the internal chip of the red dot sight with the magnetic Hall switch through the contact point, thereby changing the reticle plate of the red dot sight by raising and lowering the magnifier in the rear, so as to adapt to shooting requirements at different distances. When the magnifier is flipped open, the magnet in the magnifier flipping mechanism does not contact the magnetic switch, and the reticle pattern in the red dot sight is a dot-circle quick aiming mode. When the magnifier is flipped back, the magnet contacts the magnetic switch, and the reticle pattern changes to a sniping mode. The combined sight has advantages of a reflex sight and a telescopic sight: in a condition where only the red dot sight is used, there is no exit pupil distance, a small parallax and a large field of view, the reticle is simple and clear, and aiming is quick; in a condition where the combined sight is used, the reticle is comprehensive with detailed firing data, and long-range aiming is more accurate.

The present disclosure will be further described in detail below with reference to embodiments.

### BRIEF DESCRIPTION OF THE DRAWINGS

FIG. 1 is a structural schematic view of a combined sight of a variable-reticle red dot sight and a magnifier.
FIG. 2 is a schematic view of an aiming field of view without the magnifier.
FIG. 3 is a schematic view of an aiming field of view with the magnifier.
FIG. 4 is a structural schematic view of a magnifier flipping mechanism assembly.

Reference numerals:
1, support; 101, mounting groove; 102, rotating shaft; 103, locking block; 104, locking nut; 105, locking screw; 2, positioning groove; 3, magnifier flipping mechanism; 301, connecting plate; 302, elastic sheet pressure plate; 303, elastic sheet; 304, rotating sleeve; 305, rib; 306, recess; 4, red dot sight; 5, magnifier; 6, positioning tenon; 7, contact point; 8, magnetic Hall switch; 9, magnet.

### DETAILED DESCRIPTION

To further illustrate the technical means and effects adopted by the present disclosure to achieve predetermined objectives, the specific implementations, structural features and effects will be described in detail below with reference to the accompanying drawings and embodiments.

The technical solutions in the embodiments of the present disclosure will be clearly and completely described below with reference to the accompanying drawings. Obviously, the described embodiments are only part of the embodiments of the present disclosure, rather than all of them. Based on the embodiments of the present disclosure, all other embodiments obtained by a person skilled in the art without creative efforts shall fall within the protection scope of the present disclosure.

In the description of the present disclosure, it should be understood that the terms "center," "upper," "lower," "front," "rear," "left," "right," "vertical," "horizontal," "aligned," "overlapped," "bottom," "internal," "outer" and other orientation or positional relationships are based on the orientation or positional relationships shown in the drawings, and are only for the convenience of describing the present disclosure and simplifying the description, rather than indicating or implying that the referred device or element must have a specific orientation or be constructed and operated in a specific orientation. Therefore, they should not be construed as limiting the present disclosure.

The terms "first" and "second" are used for descriptive purposes only and should not be construed as indicating or implying relative importance or implicitly indicating the quantity of the referred technical features. Thus, features defined with "first" or "second" may explicitly or implicitly include one or more of such features. In the description of the present disclosure, unless otherwise specified, "a plurality of" means two or more.

### First embodiment

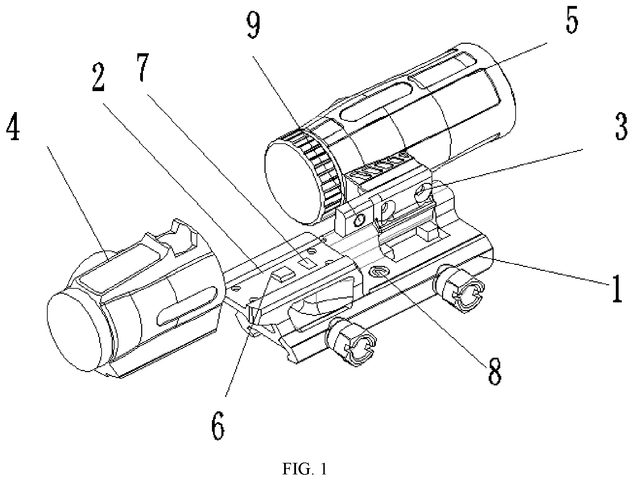

This embodiment provides a combined sight of a variable-reticle red dot sight and a magnifier as shown in FIG. 1, and the combined sight includes a support 1. A positioning groove 2 is disposed above a front portion of the support 1, and a red dot sight 4 is disposed in the positioning groove 2. That is, the red dot sight 4 has a base that matches with the positioning groove 2, and is fixedly connected to the positioning groove 2. A magnifier flipping mechanism 3 is disposed above a rear portion of the support 1 and oriented in a same direction as the positioning groove 2. The magnifier flipping mechanism 3 is movably connected to a magnifier 5 that may be flipped and adjusted along a left-right direction of the support 1. Specifically, the magnifier flipping mechanism 3 drives the magnifier 5 to rotate, allowing the magnifier 5 to be in an unused state as shown in FIG. 1 or in a used state where it cooperates with the red dot sight 4.

Further, a positioning tenon 6 is disposed at a middle portion of the positioning groove 2, and a contact point 7 is disposed behind the positioning tenon 6. The positioning tenon 6 is configured to limit and secure the red dot sight 4. A chip in the red dot sight 4 is connected to a magnetic Hall switch 8 via the contact point 7, to control a reticle pattern.

Further, the magnetic Hall switch 8 is disposed above the rear portion of the support 1 and disposed to the right of the magnifier flipping mechanism 3. A magnet 9 corresponding to the magnetic Hall switch 8 is disposed below the magnifier 5. The Hall switch 8 interacts with the magnet 9 to detect a position state of the magnifier 5 and switch the reticle pattern according to the position state thereof.

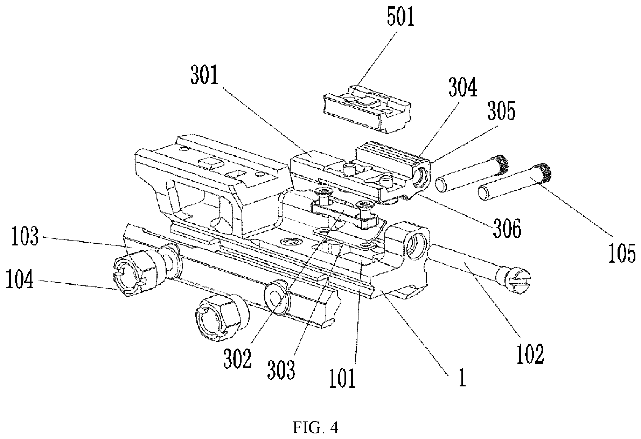

Further, as shown in FIG. 4, the magnifier flipping mechanism 3 includes a connecting plate 301, a rotating sleeve 304 integrally formed with the connecting plate 301, and an elastic sheet 303 disposed below the connecting plate 301. One end of the elastic sheet 303 is fixed in a mounting groove 101 on top of the support 1 through an elastic sheet pressure plate 302. The elastic sheet pressure plate 302 is secured to the support 1 by a mounting screw and is disposed above the elastic sheet 303 to secure the elastic sheet 303. The other end of the elastic sheet 303 is a free end, which is not in contact with the support 1. The rotating sleeve 304 is movably connected to the support 1 through a rotating shaft 102, and the rotating shaft 102 passes through mounting holes of both the support 1 and the rotating sleeve 304, to movably connect the rotating sleeve 304 to the support 1.

Further, an outer wall of the rotating sleeve 304 is provided with a plurality of ribs 305 and recesses 306 along a length direction. The ribs 305 and recesses 306 are alternately arranged along a circumferential direction of the rotating sleeve 304, and the ribs 305 and recesses 306 abut against the free end of the elastic sheet 303, which may fix a rotation angle of the rotating sleeve 304, such that the rotating sleeve 304 may be positioned at different rotation angles, that is, the magnifier 5 may be at different rotation angles.

Further, a spacer block 501 is disposed above the connecting plate 301. The mounting screw for the magnifier 5 pass through the connecting plate 301 and the spacer block 501 from bottom to top, to secure the magnifier 5.

Further, a locking block 103 is further disposed on a right side of the support 1 and is secured by a locking nut 104 and a locking screw 105. The looseness and tightness between the support 1 and the locking block 103 may be adjusted via the locking nut 104 and the locking screw 105.

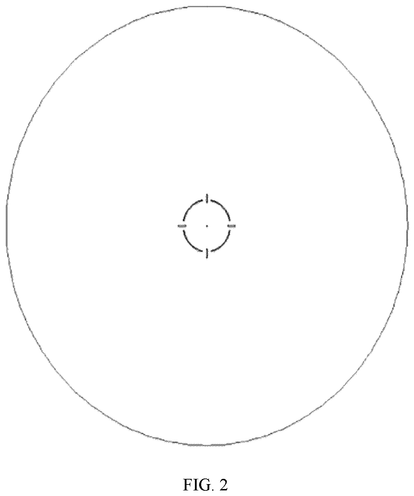

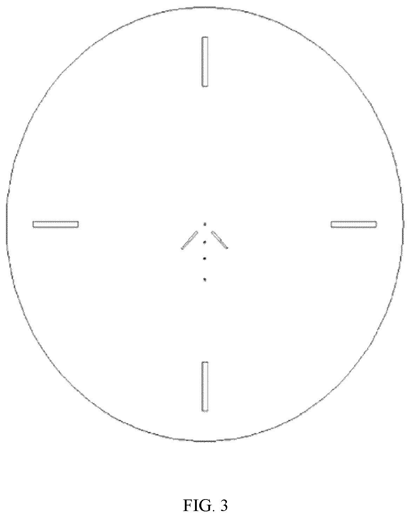

In conclusion, the combined sight of the variable-reticle red dot sight and the magnifier adapts to shooting requirements at different distances by raising and lowering the magnifier in the rear to change the reticle pattern of the red dot sight. When the magnifier is flipped open, the magnet 9 in the magnifier flipping mechanism 3 does not contact the magnetic switch 8, and the reticle pattern in the red dot sight is a dot-circle quick aiming mode, as shown in FIG. 2. When the magnifier is flipped back, the magnet 9 contacts the magnetic switch 8, and the reticle pattern changes to a sniping mode, as shown in FIG. 3. The combined sight has advantages of a reflex sight and a telescopic sight: in a condition where only the red dot sight is used, there is no exit pupil distance, a small parallax and a large field of view, the reticle is simple and clear, and aiming is quick; in a condition where the combined sight is used, the reticle is comprehensive with detailed firing data, and long-range aiming is more accurate.

The above description presents detailed explanation of the present disclosure in conjunction with specific preferred embodiments, but it should not be assumed that specific implementation of the present disclosure is limited to the description. For the person skilled in the art to which the present disclosure pertains, various simple deductions or substitutions may be made without departing from the inventive concept of the present disclosure, and all such modifications shall be considered as falling within the protection scope of the present disclosure.

## Claims

1. A combined sight of a variable-reticle red dot sight and a magnifier, comprising a support (1), wherein a positioning groove (2) is disposed above a front portion of the support (1), and a red dot sight (4) is disposed in the positioning groove (2); a magnifier flipping mechanism (3) is disposed above a rear portion of the support (1), and a magnifier (5) is movably connected to the magnifier flipping mechanism (3).

2. The combined sight of the variable-reticle red dot sight and the magnifier according to claim 1, wherein a positioning tenon (6) is disposed at a middle portion of the positioning groove (2), and a contact point (7) is disposed behind the positioning tenon (6).

3. The combined sight of the variable-reticle red dot sight and the magnifier according to claim 1, wherein a magnetic Hall switch (8) is disposed above the rear portion of the support (1) and to right of the magnifier flipping mechanism (3); and a magnet (9) corresponding to the magnetic Hall switch (8) is disposed below the magnifier (5).

4. The combined sight of the variable-reticle red dot sight and the magnifier according to claim 1, wherein the magnifier flipping mechanism (3) comprises a connecting plate (301), a rotating sleeve (304) integrally formed with the connecting plate (301), and an elastic sheet (303) disposed below the connecting plate (301); one end of the elastic sheet (303) is fixed in a mounting groove (101) on top of the support (1) through an elastic sheet pressure plate (302), and another end of the elastic sheet (303) is a free end; the rotating sleeve (304) is movably connected to the support (1) through a rotating shaft (102).

5. The combined sight of the variable-reticle red dot sight and the magnifier according to claim 4, wherein an outer wall of the rotating sleeve (304) is provided with a plurality of ribs (305) and recesses (306) along a length direction, the ribs (305) and recesses (306) are alternately arranged along a circumferential direction of the rotating sleeve (304), and the ribs (305) and recesses (306) abut against the free end of the elastic sheet (303).

6. The combined sight of the variable-reticle red dot sight and the magnifier according to claim 4, wherein a spacer block (501) is disposed above the connecting plate (301).

7. The combined sight of the variable-reticle red dot sight and the magnifier according to claim 1, wherein a locking block (103) is further disposed on a right side of the support (1), and the locking block (103) is secured by a locking nut (104) and a locking screw (105).
